# EUROPÄISCHE PATENTSCHRIFT

(11) **EP 4 011 102 B1**
(45) Veröffentlichungstag und Bekanntmachung des Hinweises auf die Patenterteilung: **01.07.2026**
(21) Anmeldenummer: 20746912.3
(22) Anmeldetag: 17.07.2020
(51) Int. Cl.: H04W 4/021, H04W 4/029, H04W 4/33, H04W 4/02, G01C 21/20

(54) **VERFAHREN UND ANORDNUNG ZUR DARSTELLUNG VON TECHNISCHEN OBJEKTEN**
METHOD AND ARRANGEMENT FOR THE REPRESENTATION OF TECHNICAL OBJECTS
PROCÉDÉ ET ENSEMBLE DE REPRÉSENTATION D'OBJETS TECHNIQUES

(30) Priorität: 07.08.2019 DE 102019211871
(43) Veröffentlichungstag der Anmeldung: 15.06.2022
(73) Patentinhaber: Siemens Schweiz AG, 8047 Zürich (CH)
(72) Erfinder: FREY, Christian, 6314 Unterägeri (CH); ZECHLIN, Oliver, 6300 Zug (CH)
(74) Vertreter: Siemens Patent Attorneys
(86) Internationale Anmeldenummer: PCT/EP2020/070317
(87) Internationale Veröffentlichungsnummer: WO 2021/023499

(56) Entgegenhaltungen:
- US-A1- 2013 303 193
- US-A1- 2017 256 097
- CHARLES WOODWARD ET AL: "IMPLEMENTATION AND EVALUATION OF A MOBILE AUGMENTED REALITY SYSTEM FOR BUILDING MAINTENANCE", PROCEEDINGS OF THE 14TH INTERNATIONAL CONFERENCE ON CONSTRUCTION APPLICATIONS OF VIRTUAL REALITY, DAWOOD N. AND ALKASS S. (EDS.), 18 November 2014 (2014-11-18), pages 306 - 315, XP055701498

## Beschreibung

Die Erfindung betrifft ein Verfahren und eine Anordnung zur Ausgabe von ortskontextuellen Informationen, insbesondere in Gebäuden, auf einem mobilen Kommunikationsendgerät eines Benutzers.

Die Lebens-/Nutzungsdauer eines Gebäudes umfasst meist mehrere Jahrzehnte. Auch wenn es technische Pläne gab oder gibt müssen diese auffindbar und lesbar sein. Weiterhin sollten diese Pläne auch der wahren Umgebung und dem aktuellen Ausbau im Gebäude ("as build", "as modified over time") entsprechen, also nach Veränderungen aktualisiert worden sein. Ferner bedarf es bei digitalen Plänen passender Software und das Bedienwissen, um die Inhalte dieser digitalen Pläne nutzen zu können.

Die amerikanische Patentanmeldung US20170256097A1 offenbart Verfahren und Systeme zur Verwendung lokaler Positionierungsbaken zur Erstellung präziser Augmented-Reality-Bilder.

Die amerikanische Patentanmeldung US20130303193A1 offenbart Systeme und Verfahren zum Implementieren einer ortsbezogenen Anwendung für ein Gebäudeinformationsmodell (BIM) auf einem Mobilgerät, wobei ein Grundriss eines Gebäudes auf einer mobilen Vorrichtung anzeigbar ist, wobei eine Anzahl von BIM-Ausrüstungsdarstellungen über den Grundriss des Gebäudes auf der mobilen Vorrichtung darstellbar sind, wobei Echtzeit-Status-informationen für die Anzahl von BIM-Ausrüstungsdarstellungen auf der mobilen Vorrichtung darstellbar sind; wobei der Grundrisses und die Anzahl von BIM-Ausrüstungsdarstellungen, sowie die Echtzeit-Status-informationen auf der Grundlage eines bestimmten Standorts des mobilen Geräts aktualisierbar sind.

Die Veröffentlichung "IMPLEMENTATION AND EVALUATION OF A MOBILE AUGMENTED REALITY SYSTEM FOR BUILDING MAINTENANCE"; PROCEEDINGS OF THE 14TH INTERNATIONAL CONFERENCE ON CONSTRUCTION APPLICATIONS OF VIRTUAL REALITY; DAWOOD N. AND ALKASS S. (EDS.). 18. November 2014 (2014-11-18); Seiten 306-315; XP055701498, CHARLES WOODWARD ET AL offenbart ein mobiles AR-System (Augmented Reality System) für Gebäude-wartungsarbeiter auf der Grundlage einer partizipativen Gestaltung von Systemanforderungen.

Technische Dokumentationen für ein Gebäude sind oft nicht oder nicht aktuell verfügbar. Technologien wie Augmented Reality zur überlagerten Anzeige von Veränderungen sind oft nicht einsetzbar, da die Aktualität und Qualität der dazu benötigten Gebäudedaten nicht gegeben sind. Weiterhin erfordern Technologien wie Augmented Reality eine entsprechende Hard- und Software sowie eine Schulung der Benutzer.

Vor-Ort-Begehung mit Demontage von verdeckenden Elementen, wie **z.B.** Decken, Wänden, Böden zur Findung verbaute Produkte ist aufwändig und unter Umständen sogar destruktiver Natur.

Es ist daher die Aufgabe der vorliegenden Erfindung, ein effektives Verfahren und eine entsprechende Anordnung zur Ausgabe von ortskontextuellen Informationen, insbesondere in Gebäuden, bereitzustellen.

Die Aufgabe wird gelöst durch ein Verfahren zur Ausgabe von ortskontextuellen Informationen, insbesondere in Gebäuden, auf einem mobilen Kommunikationsendgerät **(z.B.** Smartphone, Tablet-Computer) eines Benutzers, umfassend die folgenden Schritte:
Bestimmen der Ortsposition des mobilen Kommunikationsendgerätes; und
Bereitstellen von ortskontextuellen Informationen in Abhängigkeit der ermittelten Ortsposition auf dem mobilen Kommunikationsendgerät durch einen mit dem mobilen Kommunikationsendgerät datentechnisch verbundenen und entsprechend eingerichteten Server. Zu einem Gewerk an einem bestimmten Ort in einem Gebäude können somit technische und räumliche Informationen für
   Service-Techniker, Facility-Managern, Handwerkern, etc. mit einfachen Mitteln, d.h. ohne zusätzliche Infrastruktur zur Verfügung gestellt werden.

Mit Vorteil handelt es sich beim mobilen Kommunikationsendgerät um ein tragbares mobiles Kommunikationsendgerät, insbesondere ein Smartphone oder ein Medienabspielgerät. Derartige Geräte weisen eine Digitalkamera, eine Ausgabeeinheit, einen Datenspeicher und einen damit verbundenen Prozessor auf. Der Datenspeicher ist u.a. zum Speichern von Applikationen vorgesehen. Letztere können durch den Prozessor geladen und ausgeführt werden. Tragbare mobile Kommunikationsendgeräte sind allgemein bekannt. Bei ihnen kann es sich um ein Smartphone handeln, wie z.B. um die iPhone-Serie der Fa. Apple, um die Galaxy-Serie der Fa. Samsung oder um die Lumia-Serie der Fa. Nokia. Derartige Kommunikationsendgeräte werden auch als Mobiltelefone oder als Handy bezeichnet. Bei den tragbaren mobilen Kommunikationsendgeräten kann es sich auch um sogenannte Tablet-Computer bzw. Tablet-PCs handeln, wie z.B. um ein iPad von der Fa. Apple oder um ein Galaxy Tab von der Fa. Samsung handeln. Weiterhin kann es sich bei den Kommunikationsendgeräten um mobile Mediaplayer handeln, wie z.B. um die iPod touch-Serie der Fa. Apple oder um die Yepp-Serie der Fa. Samsung. Diese Geräte werden auch als PMP für Portable Media Player bezeichnet. Die eingangs genannten tragbaren mobilen Kommunikationsendgeräte der Fa. Apple basieren typischerweise auf einem iOS-Betriebssystem, die Geräte der Fa. Samsung auf einem Android-Betriebssystem und die Geräte der Firma Nokia auf einem Windows Phone-Betriebssystem.

Entsprechende Software für das mobile Kommunikationsendgerät kann **z.B.** von einem Online-Internet-Verkaufsportal für Computerprogramme auf das mobile Kommunikationsendgerät heruntergeladen werden und als App auf dem tragbaren mobilen Kommunikationsendgerät ausgeführt werden.

Eine erste vorteilhafte Ausgestaltung der Erfindung liegt darin, dass das Bestimmen der Ortsposition des mobilen Kommunikationsendgerätes dadurch erfolgt, dass der Benutzer mit einer Sensoreinrichtung des mobilen Kommunikationsendgerätes Landmarken und/oder Objekte am aktuellen Aufenthaltsort des Benutzers erfasst und dem Server zur Analyse und zur Bestimmung der Ortsposition weiterleitet. Beim Bildsensor kann es sich **z.B.** um eine Fotokamera oder eine Videokamera handeln. Es kann aber auch eine andere geeignete Sensorik des mobilen Kommunikationsendgerätes zum Bestimmen der aktuellen Ortsposition verwendet werden.

Eine weitere vorteilhafte Ausgestaltung der Erfindung liegt darin, dass das Bestimmen der Ortsposition des mobilen Kommunikationsendgerätes dadurch erfolgt, dass der Benutzer mit einem SLAM-Scanner (Simultaneous Localization and Mapping; Simultane Positionsbestimmung und Kartenerstellung) des mobilen Kommunikationsendgerätes Landmarken und/oder Objekte in einer 3D-Punktwolke am aktuellen Aufenthaltsort des Benutzers erfasst und dem Server zur Analyse und zur Bestimmung der Ortsposition weiterleitet. Durch den SLAM-Scanner werden 3D-Daten von Objekten (z.B. Gewerken) vor Ort in Form einer 3D-Punktewolke erfasst und mit Vorteil mit einem Zeitstempel an den Server weitergeleitet. Mit Vorteil analysiert der Server (Computer mit entsprechenden Verarbeitungs- und Speichermittel) die 3D-Punktwolke und bildet diese in ein digitalen Gebäudeinformationsmodell BIM ab, **z.B.** in Form eines digitalen Volumenmodells.

Eine weitere vorteilhafte Ausgestaltung der Erfindung liegt darin, dass das Bestimmen der Ortsposition des mobilen Kommunikationsendgerätes durch ein satellitengestütztes Positionsbestimmungssystem (GPS) und/oder durch ein Indoor-Positionsbestimmungssystem (Beacons, WLAN) und/oder durch Mobilfunkzellenauswertung erfolgt. Das Bestimmen der Ortsposition des mobilen Kommunikationsendgerätes kann somit durch bereits vorhandene Infrastruktur erfolgen.

Eine weitere vorteilhafte Ausgestaltung der Erfindung liegt darin, dass das Bestimmen der Ortsposition des mobilen Kommunikationsendgerätes durch den Server erfolgt, durch Analyse der erfassten Landmarken und/oder Objekte des aktuellen Aufenthaltsortes des Benutzers. Bei den Landmarken kann es sich um im Gebäude sichtbar angebrachte Marker bzw. Ortspunkte handeln, die durch entsprechende Sensorik des mobilen Kommunikationsendgerätes eingelesen werden können. Mit Vorteil sind die im Gebäude sichtbar angebrachten Marker bzw. Ortspunkte durch eine entsprechende Referenzierung von offiziellen Ankerpunkten ausserhalb des Gebäudes festgelegt worden. Die Referenzierung von offiziellen Ankerpunkten erfolgt z.B. durch ein Lasertachymeter oder durch Triangulation.

Eine weitere vorteilhafte Ausgestaltung der Erfindung liegt darin, dass das Bereitstellen der ortskontextuellen Informationen durch den Server durch Zugriff des Servers zu entsprechenden Einträgen einer Datenbank (BIM/Gebäude-Datenbank) erfolgt. In der Datenbank kann sich z.B. ein digitalisierter Gebäudeplan oder ein digitales Modell (BIM, Building Information Model) des entsprechenden Gebäudes befinden, mit den jeweiligen ortskontextuellen Informationen zu den Gewerken im Gebäude.

Eine weitere vorteilhafte Ausgestaltung der Erfindung liegt darin, dass die ortskontextuelle Information visuelle und/oder akustische Informationen zu einem entsprechenden Gewerk an der Ortsposition des mobilen Kommunikationsendgerätes umfasst. Dem Benutzer werden z.B. auf dem Display eines mobilen Kommunikationsendgerät z.B. technische Informationen (Hersteller, Typ, Variante, Baujahr, letzte Wartung, etc.) zu an der Ortsposition verbauten Gewerken bereitgestellt. Die technischen Informationen können aber auch durch eine Audioausgabe (z.B. über ein Headset), z.B. in Form eines Podcast oder andere Audiodatei) für den Benutzer des mobilen Kommunikationsendgerätes bereitgestellt werden. Mit Vorteil werden dem Benutzer auch technische Informationen von nicht sichtbaren bzw. verdeckten Gewerken (z.B. Gewerke hinter Wänden, Decken, Böden) auf dem mobilen Kommunikationsendgerät bereitgestellt.

Eine weitere vorteilhafte Ausgestaltung der Erfindung liegt darin, dass die ortskontextuelle Information zum entsprechenden Gewerk in Form einer Timeline-Ansicht (timeline view) auf dem Display des mobilen Kommunikationsendgerätes dargestellt wird. In Form eines Time-Line-Viewers können z.B. einzelne Bauabschnitte nebeneinander synchronisiert darstellt werden. Mit Vorteil werden in einer Timeline-Ansicht die einzelnen Bauabschnitte bzw. das Ausbaustadium (des Gebäudes oder eines Gewerkes) in einer chronologischen Abfolge darstellt. Mit Vorteil wird in der Timeline-Ansicht eine Sicht des geplanten Gewerks oder einer geplanten Baumassnahme als 3D Modell dargestellt. Mit Vorteil werden in der Timeline-Ansicht folgend bzw. anschliessend auf die Sicht des geplanten Gewerks oder einer geplanten Baumassnahme, Ausbaustufen (z.B. für definierte Abnahmezeitpunkten) des Gewerks dargestellt.

Eine weitere vorteilhafte Ausgestaltung der Erfindung liegt darin, dass die ortskontextuelle Information visuelle und/oder akustische Informationen zu einem zukünftigen/geplanten Gewerk an der Ortsposition des mobilen Kommunikationsendgerätes umfasst. Mit Vorteil hat der Server dazu Zugriff zu entsprechenden Plänen oder Simulationsergebnissen von geeigneten Simulationsprogrammen. Für einen Blick "in die Zukunft", **z.B.** aus Servicetechniker- oder Handwerkersicht, kann eine auszuführende Tätigkeit bzw. das Ergebnis davon, in dem TimeLineView als ein simuliertes bzw. modelliertes Bild (mit oder ohne Overlays) dargestellt werden. Dies gibt z.B. dem ausführenden Handwerker eine Vorstellung davon, wo das zu installierende Gerät verbaut werden soll und wie die Installation ggf. mit Anschlüssen letztlich aussehen soll.

Eine weitere vorteilhafte Ausgestaltung der Erfindung liegt im Erfassen von ortskontextuellen Informationen in Abhängigkeit der Ortsposition mit einer Sensoreinrichtung des mobilen Kommunikationsendgerätes und/oder durch eine mobile Gebäudescaneinrichtung; und im Übermitteln der erfassten ortskontextuellen Informationen durch das mobile Kommunikationsendgerät und/oder durch die mobile Gebäudescaneinrichtung über geeignete Kommunikationsverbindungen an den Server.

Eine weitere vorteilhafte Ausgestaltung der Erfindung liegt darin, dass ortskontextuelle Informationen in definierten Zeitabständen durch entsprechend eingerichtete Scan-Geräte (z.B. NavVis Scanner) und/oder durch entsprechend eingerichtete mobile Kommunikationsendgeräte erfasst und an den Server gesendet werden. Dies kann z.B. für eine Qualitätssicherung des Gebäudes bzw. von Gewerken im Gebäude verwendet werden. Die von den Scan-Geräten an den Server gemeldeten Daten (z.B. in Form einer Punktewolke) werden mit den bereits beim Server vorhandenen Daten verglichen. Durch diesen Soll-/Istvergleich der Daten können z.B. Abweichungen oder Abnützungen erkannt werden. Der Soll-/Istvergleich erfolgt durch geeignete Softwareprogramme. Mit Vorteil werden die in definierten Zeitabständen an den Server gesendeten ortskontextuelle Informationen entsprechend archiviert (z.B. in einer geeigneten Datenbank, z.B. eine In-Memory-Datenbank oder in einem Neuronalen Netz) und analysiert (z.B. durch Methoden der künstlichen Intelligenz (z.B. durch Machine Learning (maschinenbasiertes Lernen)). Mit Vorteil werden die in definierten Zeitabständen an den Server gesendeten ortskontextuelle Informationen in Form von digitalen Wissensgraphen (Knowledge Graphs) abgelegt. Mit geeigneten Analysemethoden können dadurch z.B. Aussagen zum Lebenszyklus eines Gebäudes oder eines Gewerkes gemacht werden.

Eine weitere vorteilhafte Ausgestaltung der Erfindung liegt in einem mobilen Kommunikationsendgerät, eingerichtet zur Durchführung des erfindungsgemässen Verfahrens. Heutzutage sind mobile Kommunikationsendgeräte (z.B. Smartphones) weitverbreitet und Benutzer mit ihrer Handhabung vertraut. Es sind somit keine Augmented-Reality-Brillen oder entsprechende Schulungen nötig.

Eine weitere vorteilhafte Ausgestaltung der Erfindung liegt in einem Server, eingerichtet zur Durchführung des erfindungsgemässen Verfahrens. Der Server kann sich im entsprechenden Gebäude befinden (z.B. als Bestandteil eines Gebäudeautomatisierungssystems). Der Server kann sich aber auch in einer Cloud (Rechnerwolke, Datenwolke), d.h. in einer Cloud-IT-Infrastruktur befinden. Durch entsprechende Kommunikationsverbindungen (z.B. Mobilfunk, WLAN) kann der Server mit dem mobilen Kommunikationsendgerät kommunizieren (z.B. Daten transferieren).

Die Aufgabe wird weiterhin gelöst durch eine Anordnung zur Ausgabe von ortskontextuellen Informationen, insbesondere in Gebäuden, auf einem mobilen Kommunikationsendgerät eines Benutzers, wobei die Ortsposition des mobilen Kommunikationsendgerätes (z.B. Smartphone, Tablet-Computer) bestimmt wird; und wobei ortskontextuelle Informationen in Abhängigkeit der Ortsposition auf dem mobilen Kommunikationsendgerät durch einen mit dem mobilen Kommunikationsendgerät datentechnisch verbundenen und entsprechend eingerichteten Server bereitstellbar sind. Die Anordnung lässt sich leicht realisieren bzw. implementieren, da die benötigte Infrastruktur (insbesondere die IT-Infrastruktur) üblicherweise schon vorhanden ist.

Eine weitere vorteilhafte Ausgestaltung der Erfindung liegt darin, dass ortskontextuelle Informationen in Abhängigkeit der Ortsposition mit einer Sensoreinrichtung des mobilen Kommunikationsendgerätes und/oder durch eine mobile Gebäudescaneinrichtung erfassbar sind; und
wobei die erfassten ortskontextuellen Informationen durch das mobile Kommunikationsendgerät und/oder durch die mobile Gebäudescaneinrichtung über geeignete Kommunikationsverbindungen an den Server übermittelbar sind. Durch eine geeignete bidirektionale Kommunikation (z.B. Mobilfunk) zwischen dem mobilen Kommunikationsendgerät und dem Server können auch Informationen vom mobilen Kommunikationsendgerät zum Server gesendet werden. Somit kann die Datenbasis (iBase, Datenbank der installierten Gewerke in einem Gebäude) des Servers modifiziert oder erweitert werden. Mit Vorteil werden ortskontextuellen Informationen in definierten Zeitabständen oder nach Umbauarbeiten an den Server gemeldet.

Die Erfindung sowie vorteilhafte Ausführungen der vorliegenden Erfindung werden am Beispiel der nachfolgenden Figur erläutert. Dabei zeigt:
- FIG 1: eine beispielhafte Anordnung zur Ausgabe von ortskontextuellen Informationen, insbesondere in Gebäuden,
- FIG 2: ein beispielhaftes Flussdiagramm für ein Verfahren zur Ausgabe von ortskontextuellen Informationen, insbesondere in Gebäuden, und
- FIG 3: eine beispielhafte Darstellung der Gebäudeausbaustadien in Time-Line-Ansicht.

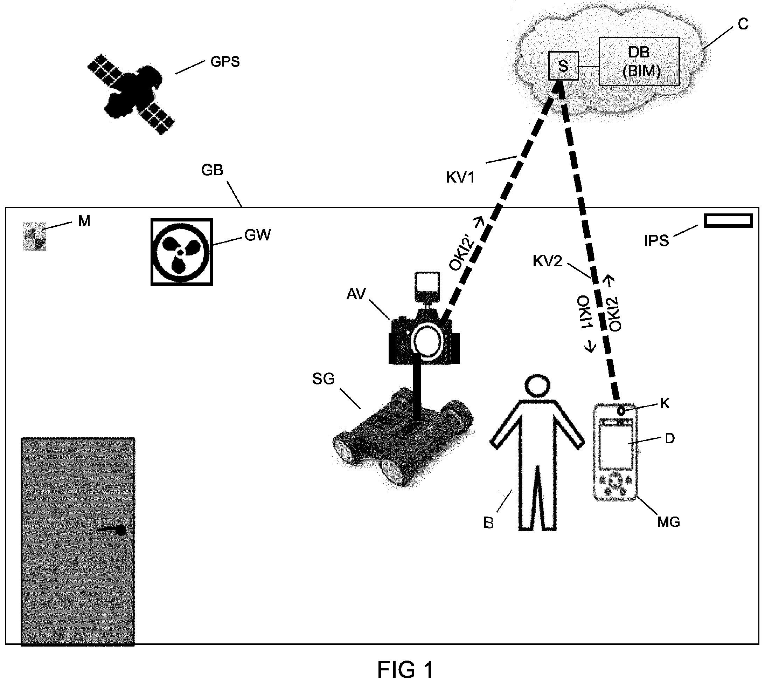

Figur 1 zeigt eine beispielhafte Anordnung zur Ausgabe von ortskontextuellen Informationen OKI1, insbesondere in Gebäuden GB, auf einem mobilen Kommunikationsendgerät MG (z.B. Smartphone oder Tablet-Computer) eines Benutzers B (z.B. Service-techniker, Facilitymanager, Architekt), wobei die Ortsposition des mobilen Kommunikationsendgerätes MG bestimmt wird; und wobei ortskontextuelle Informationen OKI1 in Abhängigkeit der Ortsposition auf dem mobilen Kommunikationsendgerät MG durch einen mit dem mobilen Kommunikationsendgerät MG datentechnisch verbundenen und entsprechend eingerichteten Server S bereitstellbar sind.

Bei der ortskontextuellen Information OKI1 kann es sich z.B. um ein in einem Gebäude GB installiertes oder verbautes Gewerk GW handeln, z.B. um Kabel, Verteiler, Rohre, Ventile, HLK-Infrastruktur (Heizung, Lüftung, Klimatechnik). Diese Gewerke GW sind oft nicht direkt sichtbar, da sie in der Regel hinter einer Verkleidung, hinter einer Wand, bzw. hinter einer Decke oder unter einem Boden installiert sind.

In Abhängigkeit der Ortsposition des mobilen Kommunikationsendgerätes MG, d.h. der aktuellen Position, wo sich das mobile Kommunikationsendgerät MG gerade befindet, werden auf dem Display D des mobilen Kommunikationsendgerätes MG Informationen zu Gewerken GW bereitgestellt, die sich auch an der aktuellen Position (z.B. ein Raum, Flur in einem Gebäude GB) des mobilen Kommunikationsendgerätes MG befinden.

Das Bestimmen der Ortsposition des mobilen Kommunikationsendgerätes MG kann dadurch erfolgen, dass der Benutzer B mit einer Sensoreinrichtung K (z.B. Bildsensor, Kamera) des mobilen Kommunikationsendgerätes MG Landmarken M und/oder Objekte am aktuellen Aufenthaltsort des Benutzers B erfasst und dem Server S zur Analyse und zur Bestimmung der Ortsposition weiterleitet. Landmarken M sind so in einem Gebäude GB angebracht, dass sie durch eine geeignete Sensoreinrichtung K erfasst bzw. ausgelesen werden können. Der jeweilige Standort der Landmarken M ist in einem Gebäudeplan oder einem Gebäudemodell (BIM, Gebäudeinformationsmodell) in einer geeigneten Notation hinterlegt. Mit Vorteil ist eine Landmarke M eines Gebäudes GB durch einen offiziellen Ankerpunkt (geodätischer Referenzpunkt) einer Gemeinde bzw. Ortschaft referenziert. Dies kann z.B. durch Hineinmessen mit einem Tachymeter erfolgen.

Das Bestimmen der Ortsposition des mobilen Kommunikationsendgerätes MG kann auch dadurch erfolgen, dass der Benutzer B mit einem SLAM-Scanner K des mobilen Kommunikationsendgerätes MG Landmarken M und/oder Objekte in der 3D-Punktwolke am aktuellen Aufenthaltsort des Benutzers B erfasst und dem Server S zur Analyse und zur Bestimmung der Ortsposition weiterleitet.

Unter SLAM (Simultaneous Localization and Mapping) versteht man die simultane Positionsbestimmung und Kartenerstellung. Dies erfolgt durch geeignete Aufnahme- oder Abtastsensorik des mobilen Kommunikationsendgerätes MG und durch geeignete Software zur Auswertung der durch die Sensorik gelieferten Punktewolke.

Das Bestimmen der Ortsposition des mobilen Kommunikationsendgerätes MG kann weiterhin durch ein satellitengestütztes Positionsbestimmungssystem GPS und/oder durch ein Indoor-Positionsbestimmungssystem IPS **(z.B.** mit iBeacons, WLAN, RFID) und/oder durch Mobilfunkzellenauswertung (z.B. GSM) erfolgen. Zum Bestimmen der Ortsposition des mobilen Kommunikationsendgerätes MG sind auch gemischte oder kombinierte Verfahren einsetzbar.

Der Sever S (Computer mit entsprechenden Verarbeitungs- und Speichermittel, sowie entsprechender Software) stellt die entsprechenden ortskontextuellen Informationen OKI1 in Abhängigkeit der jeweiligen Ortsposition des mobilen Kommunikationsendgerätes MG für das mobile Kommunikationsendgerät MG zur Verfügung z.B. durch eine Ausgabe der Informationen auf dem Display D und/oder durch geeignete Audioinformationen. Mit Vorteil ist der Sever S mit entsprechenden Positionsbestimmungssystemen datentechnisch verbunden. Die Kommunikation zwischen dem Server S und dem mobilen Kommunikationsendgerät MG erfolgt über eine geeignete Kommunikationsverbindung KV2 (z.B. über eine entsprechende Funkverbindung). Mit Vorteil stellt der Server S die ortskontextuellen Informationen OKI1 durch Zugriff auf eine entsprechende Datenbank DB zur Verfügung. Mit Vorteil sind die ortskontextuellen Informationen in einem entsprechenden Gebäudeinformationsmodell BIM in der Datenbank DB abgelegt, z.B. in einer In-Memory-Datenbank, was einen schnellen Zugriff ermöglicht. Mit Vorteil ist der Server S in einer Cloud-Infrastruktur C realisiert. Mit Vorteil umfasst das Gebäudeinformationsmodell BIM ein virtuelles Abbild (digitaler Zwilling, digital twin) für das entsprechende Gebäude GB. Das Gebäudeinformationsmodell BIM kann z.B. in IFC-Notation (Industry Foundation Classes, offener Standard im Bauwesen zur digitalen Beschreibung von Gebäudemodellen) in der Datenbank DB hinterlegt sein. Das Gebäudeinformationsmodell BIM kann z.B. in Form eines digitalen Volumenmodells hinterlegt bzw. abgespeichert sein.

Ortskontextuelle Informationen OKI2, OKI2' sind weiterhin in Abhängigkeit der Ortsposition mit einer Sensoreinrichtung K des mobilen Kommunikationsendgerätes MG und/oder durch eine mobile Gebäudescaneinrichtung (z.B. Scan-Trolleys von der Firma NavVis) SG mit einer entsprechenden Aufnahmevorrichtung AV erfassbar; und die erfassten Informationen OKI2, OKI2' können durch das mobile Kommunikationsendgerät MG und/oder durch die mobile Gebäudescaneinrichtung SG über geeignete Kommunikationsverbindungen KV1 (z.B. geeignete Funkverbindung) an den Server S für eine digitale Weiterverarbeitung übermittelt werden. Mit Vorteil werden mit den an den Server gemeldeten ortskontextuellen Informationen OKI2, OKI2' das Gebäudeinformationsmodell BIM aktualisiert. Somit kann u.a. eine optimierte und effiziente Erstellung bzw. Aktualisierung eines digitalen Zwillings (digital twin) für ein Gebäude GB erfolgen.

Wenn die ortskontextuellen Informationen OKI2, OKI2' in Form einer Punktewolke bzw. einer Punktewolkendatei an den Server S gesendet werden, kann diese durch einen entsprechenden Konverter in die Notation des Gebäudeinformationsmodells (BIM-Modell) übersetzt bzw. umgesetzt werden.

Für die Kommunikation mit dem Server S und die Bereitstellung der vom Server gelieferten Informationen ist das mobile Kommunikationsendgerät MG mit Vorteil mit einer entsprechenden App ausgestattet.

Die Erkennung von Objekten beziehungsweise Landmarken ist in vielen Anwendungsszenarien der Bildverarbeitung von grosser Bedeutung. Eine allgemeine Lösung, die für alle Anwendungsgebiete gute Ergebnisse liefert, existiert nicht. Dazu sind die Anforderungen und Rahmenbedingungen zu vielfältig. Für die verschiedenen Anwendungsgebiete kommen meistens spezialisierte Verfahren zum Einsatz, die bestimmte Anforderungen erfüllen oder die bestimmte Eigenschaften des Anwendungsszenarios voraussetzen. Ein Verfahren, das in der Bildverarbeitung sehr häufig für die Erkennung von Objekten eingesetzt wird, ist die Suche nach charakteristischen Formen. Die Auswertung der Form eines Objektes erfolgt in der Regel auf Binärbildern, in denen das Objekt segmentiert ist. Das Binärbild erhält man beispielsweise mit Hilfe von kantenbasierten Binarisierungsverfahren. Ein bekannter Algorithmus, der eine kantenbasierte Binarisierung durchführt, ist der Canny-Algorithmus. Des Weiteren nutzen andere Algorithmen verschiedenen Operatoren und Verfahren zur Erkennung von Kanten. Ist die Kontur der Landmarke im Binärbild segmentiert, kann die Form untersucht werden. Je nach Komplexität der Form kommen verschiedene Verfahren zum Einsatz. Bei Landmarken, die sich geometrisch einfach beschreiben lassen, wie beispielsweise rechteckige oder kreisförmige Strukturen, kann die generalisierte Hough-Transformation verwendet werden. Lässt sich die Form nicht oder nur sehr schwer mathematisch beschreiben, dann werden sogenannte Templates bzw. Referenzbilder verwendet. Ein Template ist eine Schablone, die der Form des gesuchten Musters entspricht. Für die Detektion des Objekts wird ein Mass für die Ähnlichkeit zwischen der Kontur und dem Template berechnet. Liegt das Mass in einem bestimmten Akzeptanzbereich, wird das Objekt identifiziert. In den meisten Anwendungsgebieten wird ein Objekt durch viele Templates repräsentiert, die es in verschiedenen Skalierungen und Rotationen darstellen. Andere Verfahren detektieren markante Punkte und erzeugen zusätzlich eine Beschreibung für diese Punkte, einen sogenannten Punktdeskriptor. Über den Punktdeskriptor ist es möglich, markante Punkte miteinander zu vergleichen und einen markanten Punkt in einem anderen Bild erneut zu identifizieren. Diese Fähigkeit prädestiniert diese Verfahren für den Einsatz bei der Identifikation von Landmarken.

Die Position einer Person mit einem mobilen Kommunikationsendgerät (Smartphone oder Tablet) in einem Objekt wird mit den zuvor beschriebenen Verfahren anhand der Umgebung erkannt, indem der Bildindex erfasst und mit der dazugehörigen Referenzdatei (Template) abgeglichen wird. Anschliessend wird die gewünschte ortsbezogene Gebäude- und Objekt-Information bereitgestellt. Diese umfasst Informationen zu an der Position verbauten oder platzierten Objekten wie Bedienelemente, Dokumentation zu installierten Geräten, Servicehistorie, verdeckte Installationen, etc. sofern vorhanden.

Weiterhin kann das System über das mobilen Kommunikationsendgerät mit erfasster Information angereichert werden. So beispielsweise mit Fotos einer "offenen Wand/Decke", verbauten Objekten, welche später als historische Information anderen Nutzern zur Verfügung steht. Weiterhin kann nach Erkennung von Position und des zu betrachtenden Objektes ein "Zukunftsbild" dargestellt werden. Dies kann z.B. ein modelliertes, simuliertes oder augmentiertes Bild des gegenwärtigen Zustandes sein. Es kann auch aus einem gerenderten 3D-Modell erzeugt werden. Eine Vor-Ort Begehung mit aufwendiger Demontage von verdeckenden Elementen, wie z.B. Decken, Wänden oder Böden entfällt. Dadurch ist z.B. eine klare Dokumentation der zu erwartenden Arbeit möglich.

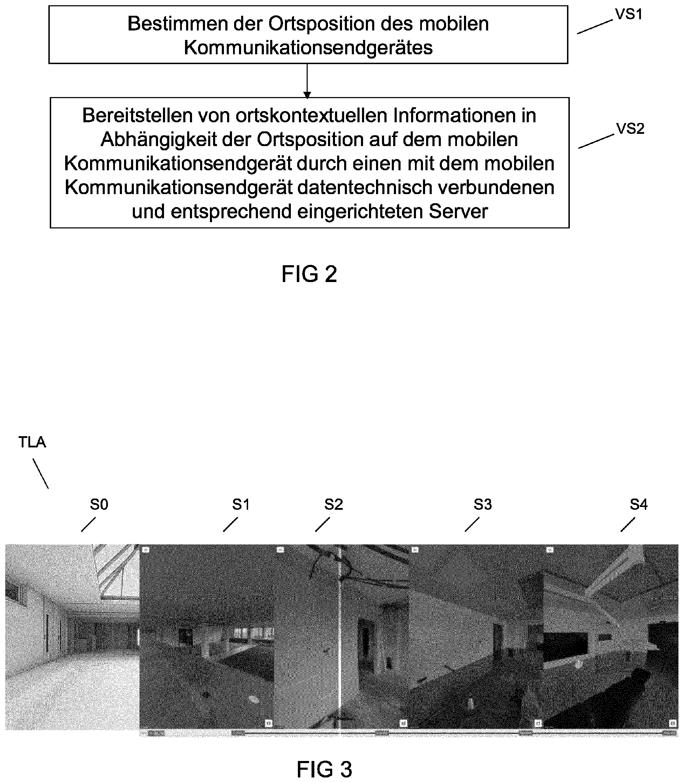

Figur 2 zeigt ein beispielhaftes Flussdiagramm für ein Verfahren zur Ausgabe von ortskontextuellen Informationen, insbesondere in Gebäuden, auf einem mobilen Kommunikationsendgerät eines Benutzers. Das Verfahren umfasst die folgenden Schritte:
(VS1) Bestimmen der Ortsposition des mobilen Kommunikationsendgerätes; und
(VS2) Bereitstellen von ortskontextuellen Informationen in Abhängigkeit der Ortsposition auf dem mobilen Kommunikationsendgerät durch einen mit dem mobilen Kommunikationsendgerät datentechnisch verbundenen und entsprechend eingerichteten Server.

Mit Vorteil erfolgt das Bestimmen der Ortsposition des mobilen Kommunikationsendgerätes dadurch, dass der Benutzer mit einer Sensoreinrichtung des mobilen Kommunikationsendgerätes Landmarken und/oder Objekte am aktuellen Aufenthaltsort des Benutzers erfasst und dem Server zur Analyse und zur Bestimmung der Ortsposition weiterleitet.

Mit Vorteil erfolgt das Bestimmen der Ortsposition des mobilen Kommunikationsendgerätes dadurch, dass der Benutzer mit einem SLAM-Scanner des mobilen Kommunikationsendgerätes Landmarken und/oder Objekte in der 3D-Punktwolke am aktuellen Aufenthaltsort des Benutzers erfasst und dem Server zur Analyse und zur Bestimmung der Ortsposition weiterleitet.

Mit Vorteil erfolgt das Bestimmen der Ortsposition des mobilen Kommunikationsendgerätes durch ein satellitengestütztes Positionsbestimmungssystem und/oder durch ein Indoor-Positionsbestimmungssystem und/oder durch Mobilfunkzellenauswertung.

Mit Vorteil erfolgt das Bestimmen der Ortsposition des mobilen Kommunikationsendgerätes durch den Server, durch Analyse der erfassten Landmarken und/oder Objekte des aktuellen Aufenthaltsortes des Benutzers.

Mit Vorteil erfolgt das Bereitstellen der ortskontextuellen Informationen durch den Server durch Zugriff des Servers zu entsprechenden Einträgen einer Datenbank, z.B. einer In-Memory-Datenbank. Dies erlaubt einen schnellen Zugriff zu den Datenbankeinträgen

Mit Vorteil umfasst die ortskontextuelle Information visuelle und/oder akustische Informationen zu einem entsprechenden Gewerk an der Ortsposition des mobilen Kommunikationsendgerätes.

Mit Vorteil wird die ortskontextuelle Information zum entsprechenden Gewerk in Form einer Timeline-Ansicht auf dem Display des mobilen Kommunikationsendgerätes dargestellt. Durch Scrollen oder "Wischen" kann ein Benutzer in der Timeline-Ansicht navigieren.

Mit Vorteil umfasst die ortskontextuelle Information visuelle und/oder akustische Informationen zu einem zukünftigen/geplanten Gewerk an der Ortsposition des mobilen Kommunikationsendgerätes.

Optional umfasst das Verfahren auch die folgenden Schritte:
Erfassen von ortskontextuellen Informationen in Abhängigkeit der Ortsposition mit einer Sensoreinrichtung des mobilen Kommunikationsendgerätes und/oder durch eine mobile Gebäudescaneinrichtung; und
Übermitteln der erfassten ortskontextuellen Informationen durch das mobile Kommunikationsendgerät und/oder durch die mobile Gebäudescaneinrichtung über geeignete Kommunikationsverbindungen an den Server.

Optional wird die ortskontextuelle Information in definierten Zeitabständen durch entsprechend eingerichtete Scan-Geräte (z.B. Scan-Trolleys von der Firma NavVis) und/oder durch entsprechend eingerichtete mobile Kommunikationsendgeräte erfasst und an den Server gesendet.

Das erfindungsgemässe Verfahren kann mit entsprechend eingerichteten Hardware- und Softwarekomponenten (z.B. Prozessoreinheit, Speichermittel, Ein-/Ausgabeeinheiten, Softwareprogramme) realisiert werden. Weiterhin kann das erfindungsgemässe Verfahren mit handelsüblichen Komponenten oder bereits vorhandener Infrastruktur realisiert werden.

### Beispielhaftes Szenario für die Durchführung des erfindungsgemässen Verfahrens:

1.Bilderfassung
   Der Nutzer der mobilen Client-App macht ein Foto von seiner aktuellen Umgebung.
2.Merkmalserkennung und -extraktion
   Das Foto wird vom mobilen Client an den Server (z.B. Indoor Location Server) gesendet. Nachdem das aufgenommene Bild auf den Server übertragen wurde, werden Merkmale erkannt und extrahiert.
3.Feature-Matching
   Der berechnete Image-Feature-Deskriptor wird mit den Einträgen in der Referenzdatenbank verglichen. Die beste Übereinstimmung wird ausgewählt.
4.Lokalisierung
   Da räumliche Informationen für die Einträge in der Referenzdatenbank verfügbar sind, wird dem Benutzer der Ort der ausgewählten besten Übereinstimmung aus Schritt 3 zurückgegeben

Das erfindungsgemässe Verfahren ermöglicht es für einen Benutzer ortsbezogene Umgebungsinformationen abzurufen und entsprechende Aktionen auszuführen. Aufbauend auf der aktuellen Ortsposition ("Wo") setzt z.B. ein Visual Index ein. Ein aufgenommenes, oder auch live in einer Kamera-Anwendung auf einem mobilen Endgerät dargestelltes Foto wird mit den Fotos der Bilddatenbank (on-/offline) des Gebäudes durch den Server abgeglichen. Bei einem Live-Kamerabild sollte im Hintergrund - idealerweise ohne Nutzerinteraktion, um den Prozess möglichst simpel zu halten - ein «Live-Abbild» (Screenshot; Fotodatei) gemacht werden, welches dann zum Abgleich mit der Bilddatenbank des Gebäudes genutzt wird. Bei diesem «Live-Abbild» wird ein Foto immer nach einer Zeit x (z.B. nach zwei bis drei Sekunden) erstellt, wenn die Live-Kamera auf ein bestimmtes Objekt oder Szene gerichtet wird. Weiterhin können statt einzelner Fotos auch Serien von ähnlichen Fotos (= nahezu gleiche Position - Video) für die Positionsbestimmung genutzt werden. Nachdem der Bildabgleich und damit die Positionsbestimmung erfolgreich abgeschlossen ist, hat der Benutzer nun mehrere Auswahlmöglichkeiten, welche ihm innerhalb einer App bzw. Browser oder ähnlicher Anwendung auf dem mobilen Kommunikationsendgerät (z.B. Smartphone oder Tablet-Computer) zur Verfügung gestellt werden:
So können aus dem Gebäudeumfeld Gewerkeansichten (idealerweise als Overlays auf dem gerade erstellten oder betrachteten Bild wie Stromkabel, Netzwerkkabel, Wasserrohre, etc.) auf dem mobilen Kommunikationsendgerät (z.B. Smartphone oder Tablet-Computer) dargestellt werden. Diese Auswahl wird dann ortsbezogen - eben dort wo sich der Benutzer aktuell befindet - überlagert auf dem Display dargestellt. Neben den Overlay-Darstellungen kann auch auf historisches 3D-Bild- bzw. Fotomaterial zurückgegriffen werden, um zu visualisieren wie sich der für einen Anwender interessante Bereich früher darstellte, z.B. ein Büroflur ohne Zwischendecke. Je nach Anwenderinteresse können nun weitere technische Pläne und Informationen dargestellt oder zum Download bereitgestellt werden. Diese Darstellungen können auf dem aktuellen Foto überlagert oder auch separat davon auf dem Bildschirm dargestellt werden. Dies könnten z.B. Arbeitsanweisungen oder Arbeitsdokumentation aus der Historie sein. Innovativ ist die Darstellung von Plänen und Bildern an dem Standort mit Blick in die Zukunft, wie die Installation bzw. der Umbau nach Abschluss der Arbeiten aussehen sollte.

Die Darstellung kann in Form eines TimeLineViewers erfolgen, der z.B. einzelnen Bauabschnitte nebeneinander synchronisiert darstellt. Für einen Blick «in die Zukunft» (aus Service-/Handwerkersicht die auszuführende Tätigkeit, bzw. das Ergebnis davon) wird in dem TimeLineView ein simuliertes oder modelliertes Bild mit oder ohne Overlays dargestellt werden. Das zeigt dem ausführenden Handwerker eine Vorstellung davon, wie die Installation letztlich aussehen soll.

Figur 3 zeigt eine beispielhafte Darstellung in Time-Line-Ansicht TLA z.B. auf einem Display eines mobilen Kommunikationsendgerät (z.B. Smartphone). In einer Time-Line-Ansicht TLA kann ein Benutzer z.B. ein Gewerk in unterschiedlichen zeitlichen Darstellungen (Sichten) S0 - S4 betrachten. Mit Vorteil sind die Darstellungen (Sichten) S0 - S4 chronologisch geordnet. S0 stellt dabei eine Sicht des geplanten Gewerks oder einer geplanten Baumassnahme als 3D Modell dar. Dieses wird aus der 3D-Modellierung/-Visualisierungen eines bauteilorientierten Gebäudemodells erzeugt. S1-S4 zeigt die zeitliche Ausbauphasen des Gebäudescan. Mit Vorteil sind die Sichten S0 - S4 örtlich synchronisiert und zeigen somit den gleichen Ort oder Ortsausschnitt im Gebäude zu unterschiedlichen Ausbauphasen. Das 3D Modell kann mit einem CAD-Programm (z.B. Revit) generiert werden und in der entsprechenden Notation auf dem Server hinterlegt sein. Das 3D Modell kann aber auch aus einem IFC- (Industrial Foundation Classes) bzw. BIM-Modell generiert bzw. hinterlegt sein.

### Beispielhafte Vorteile der vorliegenden Erfindung:

- Für Anwender einfach zu nutzende Lösung.
- Keine teure Hardware (z.B. AR Brillen) notwendig.
- Anders als bei Augmented-Reality-Anwendungen muss das gewünschte Objekt nicht "getracked" werden, d.h. es geht darum kontextrelevante Informationen einzublenden, ohne das Smartphone und dessen Kamera stetig auf das interessante Objekt zu halten. Es geht um eine einmalige Erkennung, nachdem das Smartphone - benutzerfreundlich - in jeder weiteren "normalen" Lage genutzt werden kann. Dies kann auch zeitlich entkoppelt sein.
- Darstellung von Plänen und Bildern an dem Standort mit Blick in die Zukunft möglich, um einen Eindruck zu erhalten, wie die Installation bzw. der Umbau nach Abschluss der Arbeiten aussehen sollte.
- Wenig Kosten- und Zeitaufwand vor Ort auf einer Service-/Job-Site um den richtigen Montageort zu finden.
- Vermeidung langer Suche und von Fehlern.
- Blick in die Vergangenheit und/oder Zukunft (TimeLineView) vermeidet Fehler und Missinterpretation der Ausführung. Damit wird die Effizienz erhöht und der ausführende Arbeiter bei seiner Tätigkeit unterstützt.
- Nach der Positionsbestimmung und damit auch Objekterkennung kann die gewünschte Information von einem Server abgerufen werden, welche die relevanten Informationen vorhält (z.B. Facility Management System, BIM-Datenbank, etc.).
- Prinzipiell könnte man in einem Zug erkennen, was ein Servicetechniker mit dem Smartphone gerade anschaut und die dazugehörigen Pläne oder Anweisungen bereitstellen. Ad-hoc vor Ort im Zug könnte ein Zugbegleiter Auffälligkeiten fotografieren: diese Fotos werden dann mit dem Server abgeglichen, so dass nicht nur ein Fotodokument existiert, sondern ein ausführlicheres Dokument mit kontextrelevanten Informationen zum Ort, zur Historie, zu einem Produkt etc.

### Bezugszeichen

- GPS, IPS: Positionsbestimmungssystem
- M: Marker
- GB: Gebäude
- GW: Gewerk
- C: Cloud
- S: Server
- DB: Datenbank
- BIM: Gebäudeinformationsmodell
- KV1, KV2: Kommunikationsverbindung
- B: Bediener
- MG: Mobiles Gerät
- D: Display
- AV, K: Aufnahmevorrichtung
- SG: Scan-Gerät
- OKI1, OKI2, OKI2': Ortskontextuelle Information
- VS1, VS2: Verfahrensschritt
- TLA: Time-Line-Ansicht
- S0 - S4: Sicht

## Patentansprüche

1. Verfahren zur Ausgabe von ortskontextuellen Informationen (OKI1), insbesondere in Gebäuden (GB), auf einem mobilen Kommunikationsendgerät (MG) eines Benutzers (B), umfassend die folgenden Schritte:
(VS1) Bestimmen der Ortsposition des mobilen Kommunikationsendgerätes (MG); und
(VS2) Bereitstellen von ortskontextuellen Informationen (OKI1) in Abhängigkeit der Ortsposition auf dem mobilen Kommunikationsendgerät (MG) durch einen mit dem mobilen Kommunikationsendgerät (MG) datentechnisch verbundenen und entsprechend eingerichteten Server (S),
wobei die ortskontextuelle Information (OKI1) visuelle und/oder akustische Informationen zu einem entsprechenden Gewerk (GW) an der Ortsposition des mobilen Kommunikationsendgerätes (MG) umfasst,
wobei die ortskontextuelle Information (OKI1) zum entsprechenden Gewerk (GW) in Form einer Timeline-Ansicht (TLA) auf dem Display (D) des mobilen Kommunikationsendgerätes (MG) dargestellt wird, und
wobei einzelne Bauabschnitte des Gewerkes (GW) nebeneinander in der Timeline-Ansicht (TLA) synchronisiert dargestellt werden.

2. Verfahren nach Anspruch **1,** wobei das Bestimmen der Ortsposition des mobilen Kommunikationsendgerätes (MG) dadurch erfolgt, dass der Benutzer (B) mit einer Sensoreinrichtung (K) des mobilen Kommunikationsendgerätes (MG) Landmarken (M) und/oder Objekte am aktuellen Aufenthaltsort des Benutzers (B) erfasst und dem Server (S) zur Analyse und zur Bestimmung der Ortsposition weiterleitet.

3. Verfahren nach einem der vorstehenden Ansprüche, wobei das Bestimmen der Ortsposition des mobilen Kommunikationsendgerätes (MG) dadurch erfolgt, dass der Benutzer (B) mit einem SLAM-Scanner (K, AV)des mobilen Kommunikationsendgerätes (MG) Landmarken und/oder Objekte in der 3D-Punktwolke am aktuellen Aufenthaltsort des Benutzers (B) erfasst und dem Server (S) zur Analyse und zur Bestimmung der Ortsposition weiterleitet.

4. Verfahren nach einem der vorstehenden Ansprüche, wobei das Bestimmen der Ortsposition des mobilen Kommunikationsend-gerätes (MG) durch ein satellitengestütztes Positionsbestimmungssystem (GPS) und/oder durch ein Indoor-Positionsbestimmungssystem (IPS) und/oder durch Mobilfunkzellenauswertung erfolgt.

5. Verfahren nach Anspruch 3 wobei das Bestimmen der Ortsposition des mobilen Kommunikationsendgerätes (MG) durch den Server (S) erfolgt, durch Analyse der erfassten Landmarken (M) und/oder Objekte des aktuellen Aufenthaltsortes des Benutzers (B).

6. Verfahren nach einem der vorstehenden Ansprüche, wobei das Bereitstellen der ortskontextuellen Informationen (OKI1) durch den Server (S) durch Zugriff des Servers (S) zu entsprechenden Einträgen einer Datenbank (DB) erfolgt.

7. Verfahren nach einem der vorstehenden Ansprüche, wobei die ortskontextuelle Information (OKI1) visuelle und/oder akustische Informationen zu einem zukünftigen oder geplanten Gewerk (GW) an der Ortsposition des mobilen Kommunikationsendgerätes (MG) umfasst.

8. Verfahren nach einem der vorstehenden Ansprüche, weiter umfassend:
Erfassen von ortskontextuellen Informationen (OKI2, OKI2') in Abhängigkeit der Ortsposition mit einer Sensoreinrichtung (K, AV) des mobilen Kommunikationsendgerätes (MG) und/oder durch eine mobile Gebäudescaneinrichtung (SG); und
Übermitteln der erfassten ortskontextuellen Informationen (OKI2, OKI2') durch das mobile Kommunikationsendgerät (MG) und/oder durch die mobile Gebäudescaneinrichtung (SG) über geeignete Kommunikationsverbindungen (KV1, KV2) an den Server (S).

9. Verfahren nach Anspruch 8, wobei ortskontextuelle Informationen (OKI2, OKI2') in definierten Zeitabständen durch entsprechend eingerichtete Scan-Geräte (SG) und/oder durch entsprechend eingerichtete mobile Kommunikationsendgeräte (MG) erfasst und an den Server (S) gesendet werden.

10. Anordnung zur Ausgabe von ortskontextuellen Informationen (OKI1), insbesondere in Gebäuden (GB), auf einem mobilen Kommunikationsendgerät (MG) eines Benutzers (B), umfassend ein mobiles Kommunikationsendgeät (MG) und einen Server (S),
wobei die Ortsposition des mobilen Kommunikationsendgerätes (MG) bestimmt wird; und
wobei ortskontextuelle Informationen (OKI1) in Abhängigkeit der Ortsposition auf dem mobilen Kommunikationsendgerät (MG) durch den mit dem mobilen Kommunikationsendgerät (MG) datentechnisch verbundenen und entsprechend eingerichteten Server (S) bereitstellbar sind, wobei die ortskontextuelle Information (OKI1) visuelle und/oder akustische Informationen zu einem entsprechenden Gewerk (GW) an der Ortsposition des mobilen Kommunikationsendgerätes (MG) umfasst,
wobei die ortskontextuelle Information (OKI1) zum entsprechenden Gewerk (GW) in Form einer Timeline-Ansicht (TLA) auf dem Display (D) des mobilen Kommunikationsendgerätes (MG) darstellbar sind, und
wobei einzelne Bauabschnitte des Gewerkes (GW) nebeneinander in der Timeline-Ansicht (TLA) synchronisiert dargestellt werden.

11. Anordnung nach Anspruch 10
wobei ortskontextuelle Informationen (OKI2, OKI2') in Abhängigkeit der Ortsposition mit einer Sensoreinrichtung (K, AV) des mobilen Kommunikationsendgerätes (MG) und/oder durch eine mobile Gebäudescaneinrichtung (SG) erfassbar sind; und
wobei die erfassten ortskontextuellen Informationen (OKI2, OKI2') durch das mobile Kommunikationsendgerät (MG) und/oder durch die mobile Gebäudescaneinrichtung (SG) über geeignete Kommunikationsverbindungen (KV1, KV2) an den Server (S) übermittelbar sind.

## Claims

1. Method for the output of location-specific information (OKI1), in particular in buildings (GB), on a mobile communication terminal (MG) of a user (B), comprising the following steps:
(VS1) determining the location position of the mobile communication terminal (MG); and
(VS2) providing location-specific information (OKI1) as a function of the location position on the mobile communication terminal (MG) by means of a server (S) connected via data technology with the mobile communication terminal (MG) and configured accordingly,
wherein the location-specific information (OKI1) comprises visual and/or acoustic information relating to a corresponding subsection (GW) at the location position of the mobile communication terminal (MG),
wherein the location-specific information (OKI1) relating to the corresponding subsection (GW) is shown in the form of a timeline view (TLA) on the display (D) of the mobile communication terminal (MG), and
wherein individual construction phases of the subsection (GW) are shown next to one another in synchrony in the timeline view (TLA).

2. Method according to claim 1, wherein the determination of the location position of the mobile communication terminal (MG) is carried out in that the user (B) uses a sensor device (K) of the mobile communication terminal (MG) to detect landmarks (M) and/or objects at the current location of the user (B) and forwards the same to the server (S) for analysis and for determining the location position.

3. Method according to one of the preceding claims, wherein the determination of the location position of the mobile communication terminal (MG) is carried out in that the user (B) uses a SLAM scanner (K, AV) of the mobile communication terminal (MG) to detect landmarks and/or objects in the 3D point cloud at the current location of the user (B) and forwards the same to the server (S) for analysis and to determine the location position.

4. Method according to one of the preceding claims, wherein the determination of the location position of the mobile communication terminal (MG) is carried out by means of a satellite-assisted position determination system (GPS) and/or by means of an indoor position determination system (IPS) and/or by means of mobile radio cell evaluation.

5. Method according to claim 3, wherein the determination of the location position of the mobile communication terminal (MG) is carried out by the server (S), by analysing the detected landmarks (M) and/or objects of the current location of the user (B).

6. Method according to one of the preceding claims, wherein the provision of the location-specific information (OKI1) is carried out by the server (S) by the server (S) accessing corresponding entries of a database (DB).

7. Method according to one of the preceding claims, wherein the location-specific information (OKI1) comprises visual and/or acoustic information relating to a future or planned subsection (GW) at the location position of the mobile communication terminal (MG).

8. Method according to one of the preceding claims, further comprising:
detecting location-specific information (OKI2, OKI2') as a function of the location position with a sensor device (K, AV) of the mobile communication terminal (MG) and/or by means of a mobile building scanning device (SG); and
transmitting the detected location-specific information (OKI2, OKI2') by means of the mobile communication terminal (MG) and/or by means of the mobile building scanning device (SG) via suitable communication links (KV1, KV2) to the server (S).

9. Method according to claim 8, wherein location-specific information (OKI2, OKI2') is detected at defined time intervals by correspondingly configured scanning devices (SG) and/or by correspondingly configured mobile communication terminals (MG) and sent to the server (S).

10. Arrangement for the output of location-specific information (OKI1), in particular in buildings (GB), on a mobile communication terminal (MG) of a user (B), comprising a mobile communication terminal (MG) and a server (S),
wherein the location position of the mobile communication terminal (MG) is determined; and
wherein as a function of the location position, the location-specific information (OKI1) can be provided on the mobile communication terminal (MG) by means of the server (S) connected via data technology with the mobile communication terminal (MG) and configured accordingly, wherein the location-specific information comprises visual and/or acoustic information relating to a corresponding subsection (GW) at the location position of the mobile communication terminal (MG),
wherein the location-specific information (OKI1) relating to the corresponding subsection (GW) is shown in the form of a timeline view (TLA) on the display (D) of the mobile communication terminal (MG), and
wherein individual construction phases of the subsection (GW) are shown next to one another in synchrony in the timeline view (TLA).

11. Arrangement according to claim 10,
wherein location-specific information (OKI2, OKI2') can be detected as a function of the location position with a sensor device (K, AV) of the mobile communication terminal (MG) and/or by means of a mobile building scanning device (SG); and
wherein the detected location-specific information (OKI2, OKI2') can be transmitted to the server (S) by the mobile communication terminal (MG) and/or by the mobile building scanning device (SG) via suitable communication links (KV1, KV2).

## Revendications

1. Procédé d'émission d'informations contextuelles de localisation (OKI1), en particulier dans des bâtiments (GB), sur un terminal de communication mobile (MG) d'un utilisateur (B), comprenant les étapes suivantes :
(VS1) déterminer la position de localisation du terminal de communication mobile (MG) ; et
(VS2) fournir des informations contextuelles de localisation (OKI1) en fonction de la position de localisation sur le terminal de communication mobile (MG) par l'intermédiaire d'un serveur (S) qui est connecté au terminal de communication mobile (MG) et est configuré en conséquence,
dans lequel les informations contextuelles de localisation (OKI1) comprennent des informations visuelles et/ou acoustiques concernant un corps d'état technique (GW) correspondant à la position de localisation du terminal de communication mobile (MG),
dans lequel les informations contextuelles de localisation (OKI1) pour le corps d'état technique (GW) correspondant sont affichées sous la forme d'une vue chronologique (TLA) sur l'écran (D) du terminal de communication mobile (MG), et
dans lequel les différentes phases de réalisation du corps d'état technique (GW) sont affichées de manière synchronisée les unes à côté des autres dans la vue chronologique (TLA).

2. Procédé selon la revendication 1, dans lequel la position de localisation du terminal de communication mobile (MG) est déterminée par l'utilisateur (B) à l'aide d'un dispositif capteur (K) du terminal de communication mobile (MG) pour détecter des points de repère (M) et/ou des objets à l'emplacement actuel de l'utilisateur (B) et les transmettre au serveur (S) pour analyse et détermination de la position de localisation.

3. Procédé selon l'une quelconque des revendications précédentes, dans lequel la détermination de la position de localisation du terminal de communication mobile (MG) est effectuée par l'utilisateur (B) à l'aide d'un scanner SLAM (K, AV) du terminal de communication mobile (MG) pour détecter des points de repère et/ou des objets dans le nuage de points 3D à l'emplacement actuel de l'utilisateur (B) et les transmettre au serveur (S) pour analyse et détermination de la position de localisation.

4. Procédé selon l'une quelconque des revendications précédentes, dans lequel la détermination de la position de localisation du terminal de communication mobile (MG) est effectuée par un système de positionnement par satellite (GPS) et/ou par un système de positionnement intérieur (IPS) et/ou par évaluation de cellule de téléphone mobile.

5. Procédé selon la revendication 3, dans lequel la détermination de la position de localisation du terminal de communication mobile (MG) est effectuée par le serveur (S) en analysant les points de repères (M) et/ou objets détectés de l'emplacement actuel de l'utilisateur (B).

6. Procédé selon l'une quelconque des revendications précédentes, dans lequel la fourniture des informations contextuelles de localisation (OKI1) par le serveur (S) est effectuée via l'accès du serveur (S) aux entrées correspondantes dans une base de données (DB).

7. Procédé selon l'une quelconque des revendications précédentes, dans lequel les informations contextuelles de localisation (OKI1) comprennent des informations visuelles et/ou acoustiques concernant un corps d'état technique futur ou prévu (GW) à la position de localisation du terminal de communication mobile (MG).

8. Procédé selon l'une quelconque des revendications précédentes, comprenant en outre :
détecter des informations contextuelles de localisation (OKI2, OKI2') en fonction de la position de localisation avec un dispositif capteur (K, AV) du terminal de communication mobile (MG) et/ou par un dispositif de numérisation de bâtiment mobile (SG) ; et
transmettre des informations contextuelles de localisation (OKI2, OKI2') enregistrées par le terminal de communication mobile (MG) et/ou par le dispositif de numérisation de bâtiment mobile (SG) via des connexions de communication appropriées (KV1, KV2) au serveur (S).

9. Procédé selon la revendication 8, dans lequel les informations contextuelles de localisation (OKI2, OKI2') sont enregistrées à intervalles de temps définis par des dispositifs de numérisation (SG) configurés de manière appropriée et/ou par des terminaux de communication mobiles (MG) configurés de manière appropriée et envoyées au serveur (S).

10. Agencement pour l'émission d'informations contextuelles de localisation (OKI1), en particulier dans des bâtiments (GB), sur un terminal de communication mobile (MG) d'un utilisateur (B), comprenant un terminal de communication mobile (MG) et un serveur (S),
dans lequel la position de localisation du terminal de communication mobile (MG) est déterminée ; et
dans lequel des informations contextuelles de localisation (OKI1) en fonction de la position de localisation sur le terminal de communication mobile (MG) peuvent être fournies par le serveur (S) connecté au terminal de communication mobile (MG) et configuré de manière appropriée, les informations contextuelles de localisation (OKI1) comprenant des informations visuelles et/ou acoustiques concernant un corps d'état technique (GW) correspondant à la position de localisation du terminal de communication mobile (MG),
dans lequel les informations contextuelles de localisation (OKI1) pour le corps d'état technique (GW) correspondant peuvent être affichées sous la forme d'une vue chronologique (TLA) sur l'écran (D) du terminal de communication mobile (MG), et
dans lequel les différentes phases de construction du corps d'état technique (GW) sont affichées de manière synchronisée les unes à côté des autres dans la vue chronologique (TLA).

11. Agencement selon la revendication 10,
dans lequel des informations contextuelles de localisation (OKI2, OKI2') peuvent être détectées en fonction de la position de localisation avec un dispositif capteur (K, AV) du terminal de communication mobile (MG) et/ou par un dispositif de numérisation de bâtiment mobile (SG) ; et
dans lequel les informations contextuelles de localisation (OKI2, OKI2') enregistrées peuvent être transmises au serveur (S) par le terminal de communication mobile (MG) et/ou par le dispositif de numérisation de bâtiment mobile (SG) via des connexions de communication appropriées (KV1, KV2).
